# FASCICULE DE BREVET EUROPEEN

(11) **EP 2 627 125 B1**
(45) Date de publication et mention de la délivrance du brevet: **04.11.2015**
(21) Numéro de dépôt: 13152526.3
(22) Date de dépôt: 24.01.2013
(51) Int. Cl.: H04W 48/00, H04W 48/18, H04W 88/08, H04W 36/14, H04W 36/00

(54) **Procédé de gestion, sur un terminal, de l'activation des interfaces de communication avec des réseaux de communication**
Verfahren zur Verwaltung auf einem Endgerät der Aktivierung von Kommunikationsschnittstellen mit Kommunikationsnetzen
Method for managing, on a terminal, the activation of communication interfaces with communication networks

(30) Priorité: 09.02.2012 FR 1251197
(43) Date de publication de la demande: 14.08.2013
(73) Titulaire: Orange, 75015 Paris (FR)
(72) Inventeur: Auffret, Jean.Marc, 22140 Pluzunet (FR); Terrien, Bruno, 22300 Lannion (FR)

(56) Documents cités:
- EP-A1- 1 926 251
- WO-A2-2005/055633
- US-A1- 2005 202 828
- US-A1- 2006 221 901

## Description

L'invention se rapporte à un procédé de gestion de l'activation des interfaces de communication présentes sur un terminal.

Les interfaces de communication en question incluent des ressources physiques et/ou logicielles permettant de communiquer avec un réseau de communication tel qu'un réseau de troisième génération 3G, un réseau WIFI (sigle anglo-saxon de Wireless Fidelity), ou autres.

Les interfaces sont installées dans un terminal doté de ressources physiques et logicielles incluant un processeur apte à commander l'activation des interfaces de communication.

Les terminaux actuels peuvent communiquer via plusieurs réseaux de communication. Par exemple un terminal équipé d'une interface de communication de type 3G et d'une interface de communication WIFI a la possibilité de communiquer au choix avec un réseau de troisième génération 3G ou un réseau WIFI.

Les demandes de brevet EP 1 926 251 (MOTOROLA INC (US) 28 mai 2008) et WO 2005/055633 (SIEMENS AG (DE) ; GROETING WOLFGANG (DE) ; SCHMIDT MALTE (DE) 16 juin 2005) ont traits à des systèmes permettant l'utilisation de deux réseaux.

Un réseau 3G comprend des stations de base permettant aux terminaux un accès au réseau 3G. Le problème est que chaque station de base assure un nombre limité de connexions point à point avec des terminaux situés dans la même cellule; en conséquence, lorsque le nombre de terminaux dépasse le nombre de connexions possibles dans une cellule, le réseau sature. Il en résulte une qualité de service très médiocre.

A l'inverse un point d'accès WIFI assure un nombre de connexions plus élevé. Le réseau WIFI est donc privilégié lorsqu'il est accessible par un terminal.

Ainsi, à chaque terminal est associée un point d'accès dit de référence typiquement une passerelle domestique. De cette façon, lorsque le terminal est sous la couverture des deux réseaux précités et que la communication courante s'effectue via le réseau 3G, un basculement d'interface du réseau 3G vers le réseau WIFI est réalisé pour que le terminal communique via le réseau WIFI si la passerelle en question est la passerelle de référence.

Plus précisément, le basculement entre interface est réalisé de la façon suivante :
- Une étape préalable consiste à créer, pour un terminal, une correspondance entre l'identifiants de passerelle dite de référence et un identifiant de station de base du réseau 3G et à stocker cette correspondance dans une base de données ;
- Ensuite, lors du déplacement du terminal, dès que la station de base courante avec laquelle communique le terminal a un identifiant associé à la passerelle de référence du terminal, un basculement d'interface a lieu. A ce stade, le terminal peut communiquer avec la passerelle via le réseau WIFI.

Les inventeurs ont constaté que la station de base avec laquelle le terminal peut communiquer est très fluctuante car fonction de l'orientation du terminal vis-à-vis des stations de base environnantes, du type de réseau capté (2G, 3G, LTE, etc.), et de la topologie des lieux. En conséquence, très souvent, lorsque le terminal se situe dans la zone couverte par la passerelle de référence, l'identifiant de la station courant ne correspond pas toujours à l'identifia nt de la station qui a fait l'objet d'une correspondance à l'étape préalable définie ci-dessus, mais à d'autres identifiants de stations voisines.

L'invention offre une solution ne présentant pas les inconvénients de l'état de la technique.

A cet effet, selon un aspect fonctionnel, l'invention a pour objet un procédé de gestion de l'activation d'une première interface de communication incluse dans un terminal pour la communication avec un premier point d'accès offrant une première zone de couverture réseau, le terminal incluant en outre une deuxième interface de communication pour la communication avec une pluralités de deuxièmes points d'accès offrant des deuxièmes zones de couverture respectives, le premier point d'accès étant associé à un premier identifiant et les deuxièmes points d'accès étant associés à des deuxièmes identifiants respectifs, **caractérisé en ce que**, lorsque la première interface est activée, la réception d'un deuxième identifiant détecté dans la première zone de couverture est suivie d'une création d'une correspondance entre le premier identifiant et le deuxième identifiant reçu, et en ce que, ultérieurement, la première interface est activée si au moins une correspondance existe.

Grâce à l'invention, à un même premier identifiant peut correspondre plusieurs deuxièmes identifiants. Ainsi, l'invention permet d'étendre la zone dans laquelle la première interface de communication sera active. L'invention répond donc au besoin de privilégier les communications via le premier réseau à savoir, dans notre exemple, le réseau WIFI. En d'autres mots, l'invention permet d'activer l'interface wifi dès que possible.

Selon un mode de mise en oeuvre particulier de l'invention, si l'activation de la première interface s'effectue hors de la première zone de couverture, une notification est émise suite à l'entrée du terminal dans la première zone couverte. De cette façon, un utilisateur du terminal se situant dans une deuxième zone de couverture sait à quel moment dans cette deuxième zone la première interface est utilisée pour communiquer en lieu et place de la deuxième interface.

Selon un autre mode de mise en oeuvre, qui pourra être mis en oeuvre alternativement ou cumulativement avec le précédent, si une zone couverte par un deuxième point d'accès inclut au moins deux premiers points d'accès, les premiers points d'accès s'échangent les correspondances créées. Ce mode a un intérêt lorsque les premiers points d'accès sont proches les uns des autres.

Selon un aspect matériel, l'invention a trait à un terminal incluant une première interface de communication incluse pour la communication avec un premier point d'accès offrant une première zone de couverture réseau, une deuxième interface de communication pour la communication avec au moins un deuxième point d'accès offrant une deuxième zone de couverture, le premier point d'accès étant associé à un premier identifiant et les deuxièmes points d'accès étant associés à des deuxièmes identifiants respectifs, caractérisé en ce qu'il comprend
o des moyens de création de correspondances qui, au cours du déplacement du terminal, crée au moins une correspondance entre un premier identifiant dudit premier point d'accès et un deuxième identifiant d'un deuxième point d'accès lorsque le deuxième identifiant est reçu dans la première zone de couverture,
o des moyens d'activation aptes à activer la première interface (COM1) lorsque qu'au moins une correspondance existe,

L'invention a trait aussi à un programme d'ordinateur comprenant des instructions de code qui lorsqu'il exécuté par un processeur réalise les étapes du procédé défini ci-dessus.

Enfin, selon un autre aspect matériel, l'invention a trait à un support d'enregistrement lisible par un terminal sur lequel est enregistré un programme d'ordinateur comprenant des instructions pour l'exécution des étapes du procédé défini ci-dessus.

L'invention sera mieux comprise à la lecture de la description qui suit, donnée à titre d'exemple et faite en référence aux dessins annexés.

### Les figures:

La figure 1 représente un système informatique sur lequel est illustré un mode de réalisation du procédé de l'invention.
La figure 2 est une vue schématique des circuits inclus dans un terminal sur lequel le précédé de l'invention peut être mise en oeuvre.
La figure 3 représente un organigramme illustrant un mode de réalisation du procédé de l'invention.
La figure 4 est un organigramme illustrant une variante du mode de réalisation décrit en référence à la figure 3

### Description détaillée d'un exemple de réalisation illustrant l'invention

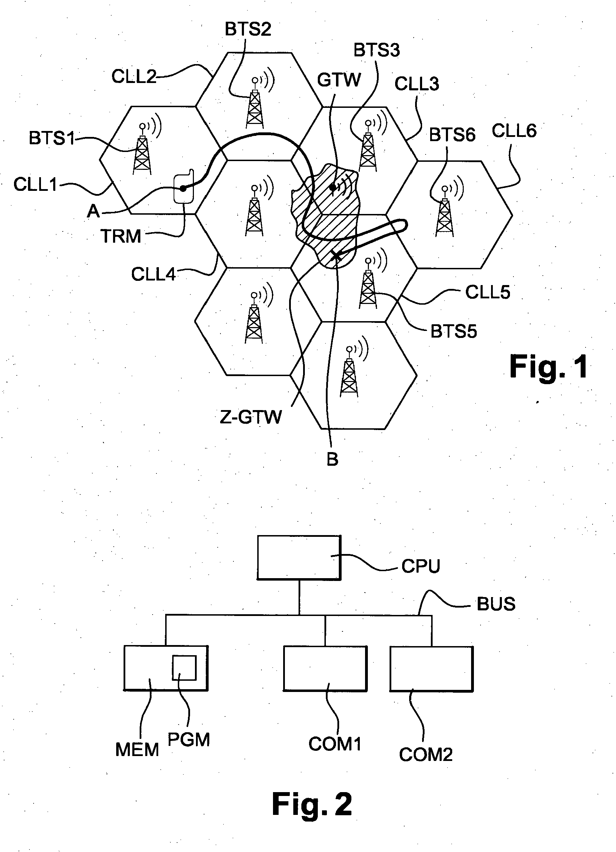

La figure 1 représente un système SYS aussi un deuxième réseau de communication. Dans notre exemple, ce deuxième réseau est un réseau WIFI. A cet effet, un point d'accès illustré au moyen d'une passerelle domestique GTW émet des signaux radioélectriques qui forment une première zone de couverture réseau Z-GTW (partie hachurée sur la figure 1).

Le système SYS comprend en outre des stations de base formant un deuxième réseau de télécommunication. Dans notre exemple, six stations de base BTS1-BTS6 sont référencées sur la figure 1. Les six stations émettent des signaux radioélectriques formant une zone de couverture respective CLL1-CLL6. Il en résulte plusieurs zones de couvertures illustrées au moyen d'hexagones respectifs. Une zone sera désignée par le terme cellules dans la suite de la description. A noter que l'hexagone est la forme régulière qui ressemble le plus au cercle et que l'on peut juxtaposer sans laisser de zones vides. Toutefois, il faut noter que la réalité du terrain est bien différente de ce modèle théorique, notamment en zone urbaine où de nombreux obstacles empêchent une propagation linéaire.

Dans notre exemple, la passerelle GTW se situe dans la zone CLL3.

Aussi, dans notre exemple, la zone Z-GTW recouvre en partie les zones cellulaires CLL3, CLL4 et CLL5.

Dans notre exemple, un terminal mobile TRM est associé à la passerelle GTW. Cette passerelle est une passerelle de référence GTW pour le terminal en ce sens que lorsque le terminal est dans la zone de couverture de cette passerelle, un appairage entre le terminal et la passerelle de référence s'effectue automatiquement.

Le terminal comprend des ressources physiques et logicielles dont un microprocesseur CPU. Ce deuxième terminal comprend en outre
- une première interface de communication COM1 et une seconde interface de communication COM2 permettant de communiquer avec le réseau WIFI et 3G , respectivement, aptes à être activées ;
- des moyens de mémorisation MEM apte à stocker des données dont une programme PGM apte à réaliser le procédé de l'invention.

Les moyens décrits ci-dessus ainsi que le premier microprocesseur CPU sont reliés entre eux par l'intermédiaire d'un bus BUS. Rappelons qu'un bus a pour fonction d'assurer le transfert de données numériques entre les différents circuits d'un terminal. Dans notre exemple, le bus en question inclut un bus de données et un bus de contrôle.

Dans notre exemple, la passerelle GTW est associée à un identifiant Id-GTW. Les stations de base BTS1-BTS6 sont également associées à un identifiant respectif CLL-ID1 à CLL-ID6.

Les identifiants sont des identifiants aptes à identifier des zones géographiques.

Dans notre exemple, optionnellement, une correspondance est créée initialement entre l'identifiant de la passerelle Id-GTW et l'identifiant CLL-ID3 de la troisième station BTS3. De cette façon, lorsque le terminal est localisé dans la troisième cellule CLL3, la première interface WIFI est activée afin que :
- si le terminal n'est pas dans la zone de couverture de la passerelle GTW, le terminal soit prêt à communiquer via le réseau WIFI;
- de communiquer via la passerelle si le terminal est dans la zone de couverture de la passerelle.

En d'autres mots, la première interface WIFI est activée lorsque le terminal TRM se situe dans la troisième cellule CLL3, quelque soit le lieu où se situe le terminal dans la troisième cellule, i.e. dans la zone de couverture de la passerelle ou hors de portée de la zone de couverture de la passerelle GTW.

Selon l'invention, lorsque la première interface WIFI est activée, la réception d'un deuxième identifiant CLL-Idn, autre que celui ayant fait l'objet de la correspondance préalable, à savoir CLL-ID3, détecté dans la première zone de couverture Z-GTW, fait l'objet d'une nouvelle correspondance avec l'identifiant Id-GTW de la passerelle. Ensuite, lors du déplacement du terminal, si une correspondance est vérifiée parmi les correspondances créées, la première interface WIFI est activée.

En d'autres mots, en supposant que la première interface WIFI est activée car une correspondance existe, la réception d'un deuxième identifiant, autre que celui ayant fait l'objet de la correspondance préalable, détecté au cours du déplacement du terminal dans la première zone de couverture Z-GTW, fait l'objet d'une nouvelle correspondance avec le premier identifiant.

Ultérieurement, si le terminal se situe dans une cellule dont l'identifiant a fait l'objet d'une correspondance,
- la première interface demeure activée si elle est déjà activée
- ou elle est activée si elle ne l'est pas déjà.

Le procédé de l'invention permet ainsi de récolter de nouvelles correspondances au fil du temps au cours du déplacement du terminal. Cela permet d'étendre la zone d'activation de l'interface de communication WIFI.

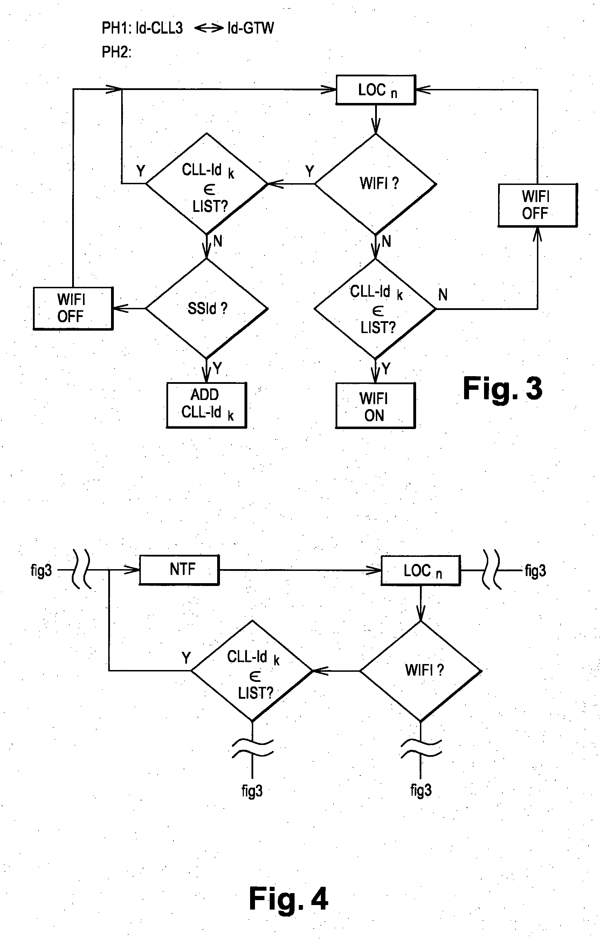

Un mode de réalisation va maintenant être décrit en référence aux figures 3 et 4.

Ce mode comprend une première phase PH1 préalable optionnelle, et une deuxième phase PH2.

Lors d'une première phase PH1 préalable, une première correspondance est créée entre l'identifiant de la passerelle de référence IdGTW et l'identifiant de la station de base CLL-ID3 dans laquelle se trouve la station de base. Cette première correspondance peut être réalisée manuellement ou automatiquement.

La deuxième phase PH2 a lieu ensuite. Cette deuxième phase, décrite en référence à la figure 3, comprend plusieurs étapes.

Lors de cette deuxième phase, pour un lieu donné LOCn où se situe le terminal, et en supposant que ce lieu se situe dans une cellulle CLLk associé à l'identifiant CLL-IDk, les étapes suivantes sont exécutées :
- lors d'une étape de vérification (WIFI ?), est vérifié si le terminal est dans une zone de couverture WIFI ;
   ∘ dans la négative, une étape de vérification (CLL-IDk ∈ List?) a lieu au cours de laquelle est vérifié si l'identifiant de cellule courante CLL-IDk (k est un entier) est associé à l'identifiant de la passerelle Id-GTW ;
      ▪ dans la négative, la première interface WIFI est inactivée (WIFI OFF)
      ▪ dans l'affirmative, la première interface WIFI est activée.
   ∘ Dans l'affirmative, une étape de vérification (CELL-ID ∈ List?) a lieu au cours de laquelle est vérifié si l'identifiant de cellule courante CLL-IDk (k est un entier) est associé à l'identifiant de la passerelle Id-GTW ;
      ▪ Dans l'affirmative, la première interface WIFI reste active et l'étape de vérification (WIFI ?) est de nouveau exécutée.
      ▪ Dans la négative, une étape de vérification (SSID ?) a lieu au cours de laquelle est vérifiée si la zone de couverture courante WIFI correspond à la zone de couverture de la passerelle GTW.
         - Dans la négative, la première interface est inactivée, et l'étape de vérification (WIFI ?) est de nouveau exécutée
         - Dans l'affirmative, l'identifiant CLLk-ID de la cellule courante fait l'objet d'une correspondance (ADD CLL-IDk), également appelée association dans le présent texte, avec l'identifiant Id-GTW de la passerelle GTW.

Chaque nouvelle correspondance est stockée en mémoire pour former une liste de correspondances LIST.

Dans notre exemple, ces étapes sont exécutées à chaque transfert automatique inter/intra cellulaire (plus souvent désigné par le terme handover) à des points géographiques LOCn donnés, par exemple à une localisation LOC1 dans la cellule CLL1, à une localisation LOC2 dans la cellule CLL2, etc. ; cependant, une fréquence plus élevée peut être envisagée. Par exemple, la deuxième phase PH2 peut être exécutée plusieurs fois dans une même cellule.

Dans le mode de réalisation choisi, en référence à l'algorithme de la figure 3, On suppose que la seconde interface de communication 3G est activée initialement et que donc le terminal communique via le réseau 3G lors de son déplacement.

Initialement, le terminal se situe dans la première cellule CLL1 et se déplace en direction de la deuxième cellule CLL2.

Lorsque le terminal est situé dans la première cellule CLL1, l'étape de vérification (WIFI ?) a lieu au cours de laquelle est vérifié si le terminal est dans une zone de couverture d'une passerelle ; dans notre exemple, ce n'est pas le cas ; En conséquence, l'étape de vérification (CELL-IDk ∈ List?) a lieu au cours de laquelle il est vérifié si l'identifiant de cellule courante CLL-ID1 est associé à l'identifiant de la passerelle Id-GTW ; Dans notre exemple, il n'y a pas d'association, la seconde interface de communication 3G demeure donc active et l'interface de communication WIFI reste inactive (WIFI OFF) dans cette première cellule CLL1.

Le terminal TRM entre ensuite dans la deuxième cellule CLL2. Les mêmes étapes sont exécutées à la différence que l'identifiant de cellule est CLL-ID2.

Le terminal TRM entre ensuite dans la troisième cellule CLL3. Dans cette troisième cellule, l'étape (WIFI ?) est exécutée au cours de laquelle est vérifié si le terminal est dans la zone de couverture d'une passerelle; dans notre exemple ce n'est pas le cas ; cette étape de vérification est suivie de l'étape de vérification (CELL-IDk ∈ List?) de l'existence d'une correspondance entre l'identifiant de cellule CLL-ID3 de cette quatrième cellule avec l'identifiant de la passerelle GTW ; c'est le cas, la première interface WIFI est donc activée (WIFI ON)

Le terminal TRM entre ensuite dans la quatrième cellule CLL4. Dans cette quatrième cellule, l'étape (WIFI ?) est exécutée au cours de laquelle est vérifié si le terminal est dans la zone de couverture d'une passerelle. Dans notre exemple c'est le cas ; l'étape de vérification (WIFI ?) est suivie de l'étape de vérification (CELL-IDk ∈ List?) au cours de laquelle est vérifié si l'identifiant de la quatrième cellule est associée à l'identifiant de la passerelle GTW ; dans notre exemple ce n'est pas le cas ; cette étape de vérification (CELL-IDk ∈ List?) est donc suivie de l'étape de vérification (SSID ?) au cours de la quelle est vérifiée si la zone de couverture WIFI correspond à la passerelle GTW. Dans notre exemple, c'est le cas, en conséquence, une nouvelle association (ADD CLL-ID4) est créée entre l'identifiant CLL-ID4 de la quatrième cellule et l'identifiant de la passerelle Id-GTW.

Le terminal entre ensuite dans la cinquième cellule CLL5. Dans cette cinquième cellule, alors que le terminal se déplace dans la zone de couverture de la passerelle, l'étape (WIFI ?) est exécutée au cours de laquelle est vérifié si le terminal est dans la zone de couverture d'une passerelle ; dans notre exemple c'est le cas ; cette étape de vérification (WIFI ?) est suivie de l'étape de vérification (CELL-IDk ∈ List?) au cours de laquelle est vérifié si l'identifiant de la cinquième cellule est associée à l'identifiant de la passerelle GTW ; dans notre exemple ce n'est pas le cas ; cette étape de vérification (CELL-IDk ∈ List?) est donc suivie d'une étape de vérification (SSID ?) au cours de la quelle est vérifié si zone de couverture WIFI correspond à la passerelle GTW. Dans notre exemple, c'est le cas, en conséquence, une nouvelle association (ADD CLL-ID5) est créée entre l'identifiant CLL-ID5 de la cinquième cellule et l'identifiant de passerelle Id-GTW. Cette nouvelle correspondance s'ajoute aux précédentes dans la liste LIST.

Au cours du déplacement dans la cinquième cellule CLL5, le terminal sort de la zone de couverture de la passerelle Z-GTW. l'étape (WIFI ?) est exécutée au cours de laquelle est vérifié si le terminal est dans la zone de couverture d'une passerelle; dans notre exemple ce n'est pas le cas ; cette étape de vérification (WIFI ?) est suivie de l'étape de vérification (CELL-IDk ∈ List?) au cours de laquelle est vérifié si l'identifiant de la cinquième cellule est associée à l'identifiant de la passerelle GTW ; dans notre exemple, c' est le cas ; la seconde interface ainsi que la première restent donc actives.

Le terminal TRM poursuit son déplacement dans la sixième cellule CLL6. Au cours de son déplacement dans cette sixième cellule, alors que le terminal a quitté la zone de couverture de la passerelle, l'étape (WIFI ?) est exécutée au cours de laquelle est vérifié si le terminal est dans la zone de couverture d'une passerelle ; dans notre exemple, ce n'est pas le cas ; en conséquence l'étape de vérification (CELL-IDk ∈ List?) est réalisée au cours de laquelle est vérifié si l'identifiant de la sixième cellule est associée à l'identifiant de passerelle ; dans notre exemple, ce n'est pas le cas ; la première interface de communication WIFI est donc inactivé (WIFI OFF).

Le terminal TRM poursuit son déplacement et retourne dans la cinquième cellule CLL5. Au cours de son déplacement, alors que le terminal est hors de portée de la zone de couverture de la passerelle, l'étape (WIFI ?) est exécutée au cours de laquelle est vérifié si le terminal est dans la zone de couverture d'une ; dans notre exemple c'est le cas ; cette étape de vérification (WIFI ?) est suivie de l'étape de vérification (CELL-IDk ∈ List?) au cours de laquelle est vérifié si l'identifiant de la quatrième cellule est associée à l'identifiant de la passerelle GTW ; dans notre exemple c'est le cas ; la première interface WIFI demeure donc active.

Selon une variante, illustrée sur la figure 4, si l'activation de la première interface s'effectue hors de la première zone de couverture, une notification NTF est émise suite à l'entrée du terminal dans la zone couverte de la passerelle. Par exemple, lorsque le terminal se situe dans la troisième zone CLL3 hors de la zone de couverture de la passerelle, la première interface WIFI est activée. Lorsque, dans cette même troisième cellule, le terminal entre dans la zone de couverture Z-GTW de la passerelle, la notification NTF est émise afin qu'un utilisateur du terminal communique via ce réseau s'il le souhaite.

Selon une autre variante, si une zone est couverte par plusieurs passerelles, ces dernières s'échangent les correspondances créées au fil du déplacement du terminal.

Pour la réalisation du procédé, le terminal TRM dispose
- de moyens de création de correspondances qui, au cours du déplacement du terminal, crée au moins une correspondance entre un premier identifiant dudit premier point d'accès et un deuxième identifiant d'un deuxième point d'accès lorsque le deuxième identifiant est reçu dans la première zone de couverture,
- et de moyens d'activation aptes à activer la première interface COM1 lorsqu'au moins une correspondance existe.

Dans notre exemple, ces moyens sont des des programmes stocké dans la mémoire MEM du terminal.

## Revendications

1. Procédé de gestion de l'activation d'une première interface de communication (COM1) incluse dans un terminal (TRM) pour la communication avec un premier point d'accès (GTW) offrant une première zone de couverture réseau (Z-GTW), le terminal incluant en outre une deuxième interface de communication (COM2) pour la communication avec une pluralités de deuxièmes point d'accès (BTSn) offrant des deuxième zones de couverture respectives (CLLn), le premier point d'accès étant associé à un premier identifiant et les deuxièmes points d'accès étant associés à des deuxièmes identifiants respectifs, **caractérisé en ce que**, au cours du déplacement du terminal, lorsque la première interface est activée, la réception d'un deuxième identifiant détecté dans la première zone de couverture est suivie d'une création d'une correspondance entre le premier identifiant et le deuxième identifiant reçu, et **en ce que**, ultérieurement, la première interface est activée si au moins une correspondance existe.

2. Procédé selon la revendication 1, **caractérisé en ce que** si l'activation de la première interface s'effectue hors de la première zone de couverture, une notification est émise suite à l'entrée du terminal dans la première zone couverte.

3. Procédé activation selon la revendication 1, **caractérisé en ce que** si une zone couverte par un deuxième point d'accès inclut au moins deux premiers points d'accès, les premiers points d'accès s'échangent les correspondances créées.

4. Terminal (TRM) incluant une première interface de communication (COM1) pour la communication avec un premier point d'accès (GTW) offrant une première zone de couverture réseau (Z-GTW), une deuxième interface de communication (COM2) pour la communication avec au moins un deuxième point d'accès (BTSn) offrant une deuxième zone de couverture (CLLn), le premier point d'accès étant associé à un premier deuxième point d'accès lorsque le deuxième identifiant est reçu dans la première zone de couverture, et des moyens d'activation aptes à activer la première interface (COM1) lorsqu'au moins une correspondance existe,

5. Programme d'ordinateur apte à être mis en oeuvre sur un terminal tel que défini dans la revendication 4, le programme comprenant des instructions de code qui, lorsqu'il exécuté par un processeur (CPU) réalise les étapes du procédé défini dans la revendication 1.

## Patentansprüche

1. Verfahren zur Verwaltung der Aktivierung einer ersten Kommunikationsschnittstelle (COM1), die in ein Endgerät (TRM) für die Kommunikation mit einem ersten Zugangspunkt (GTW), der eine erste Netzabdeckungszone (Z-GTW) bietet, eingeschlossen ist, wobei das Endgerät ferner eine zweite Kommunikationsschnittstelle (COM2) für die Kommunikation mit einer Vielzahl von zweiten Zugangspunkten (BTSn), die jeweilige zweite Abdeckungszonen (CLLn) bieten, einschließt, wobei der erste Zugangspunkt mit einem ersten Identifikator verbunden ist und die zweiten Zugangspunkte mit jeweiligen zweiten Identifikatoren verbunden sind, **dadurch gekennzeichnet, dass** während der Verschiebung des Endgeräts, wenn die erste Schnittstelle aktiviert ist, auf den Empfang eines zweiten Identifikators, der in der ersten Abdeckungszone erfasst wird, die Einrichtung einer Korrespondenz zwischen dem ersten Identifikator und dem zweiten empfangenen Identifikator folgt, und dass später die erste Schnittstelle aktiviert wird, wenn mindestens eine Korrespondenz vorhanden ist.

2. Verfahren nach Anspruch 1, **dadurch gekennzeichnet, dass**, wenn die Aktivierung der ersten Schnittstelle außerhalb der ersten Abdeckungszone erfolgt, eine Mitteilung nach dem Eintreten des Endgeräts in die erste abgedeckte Zone entsandt wird.

3. Aktivierungsverfahren nach Anspruch 1, **dadurch gekennzeichnet, dass**, wenn eine von einem zweiten Zugangspunkt abgedeckte Zone mindestens zwei erste Zugangspunkte einschließt, die ersten Zugangspunkte die eingerichteten Korrespondenzen austauschen.

4. Endgerät (TRM), umfassend eine erste Kommunikationsschnittstelle (COM1) für die Kommunikation mit einem ersten Zugangspunkt (GTW), der eine erste Netzabdeckungszone (Z-GTW) bietet, eine zweite Kommunikationsschnittstelle (COM2) für die Kommunikation mit mindestens einem zweiten Zugangspunkt (BTSn), der eine zweite Abdeckungszone (CLLn) bietet, wobei der erste Zugangspunkt mit einem zweiten Zugangspunkt verbunden ist, wenn der zweite Identifikator in der ersten Abdeckungszone empfangen wird, und Aktivierungsmittel, die geeignet sind, die erste Schnittstelle (COM1) zu aktivieren, wenn mindestens eine Korrespondenz vorhanden ist.

5. Computerprogramm, das geeignet ist, auf einem Endgerät, wie in Anspruch 4 definiert, eingesetzt zu werden, wobei das Programm Codebefehle umfasst, und das, wenn es von einem Prozessor (CPU) ausgeführt wird, die Schritte des in Anspruch 1 definierten Verfahrens durchführt.

## Claims

1. Method for managing the activation of a first communication interface (COM1) included in a terminal (TRM) for communication with a first access point (GTW) offering a first network coverage zone (Z-GTW), the terminal furthermore including a second communication interface (COM2) for communication with a plurality of second access points (BTSn) offering respective second coverage zones (CLLn), the first access point being associated with a first identifier and the second access points being associated with respective second identifiers, **characterized in that**, in the course of the displacement of the terminal, when the first interface is activated, the reception of a second identifier detected in the first coverage zone is followed by a creation of a correspondence between the first identifier and the second identifier received, and **in that**, subsequently, the first interface is activated if at least one correspondence exists.

2. Method according to Claim 1, **characterized in that** if the activation of the first interface takes place outside of the first coverage zone, a notification is sent following the entry of the terminal into the first zone covered.

3. Activation method according to Claim 1, **characterized in that** if a zone covered by a second access point includes at least two first access points, the first access points mutually exchange the correspondences created.

4. Terminal (TRM) including a first communication interface (COM1) for communication with a first access point (GTW) offering a first network coverage zone (Z-GTW), a second communication interface (COM2) for communication with at least one second access point (BTSn) offering a second coverage zone (CLLn), the first access point being associated with a first second access point when the second identifier is received in the first coverage zone, and activation means able to activate the first interface (COM1) when at least one correspondence exists.

5. Computer program able to be implemented on a terminal such as defined in Claim 4, the program comprising code instructions which, when they are executed by a processor (CPU), carry out the steps of the method defined in Claim 1.
